# EUROPÄISCHE PATENTSCHRIFT

(11) **EP 2 833 007 B1**
(45) Veröffentlichungstag und Bekanntmachung des Hinweises auf die Patenterteilung: **14.12.2016**
(21) Anmeldenummer: 13178344.1
(22) Anmeldetag: 29.07.2013
(51) Int. Cl.: F16C 11/04, B23K 31/02, B23K 101/00

(54) **Drehbare Verbindung**
Rotatable connection
Liaison rotative

(43) Veröffentlichungstag der Anmeldung: 04.02.2015
(73) Patentinhaber: MAGNA STEYR Engineering AG & Co KG, 8041 Graz (AT)
(72) Erfinder: Fandl, Erwin, 8200 Gleisdorf (AT); Mayr, Franz, 8323 St. Marein bei Graz (AT)
(74) Vertreter: Zangger, Bernd

(56) Entgegenhaltungen:
- US-A- 2 556 449
- US-A- 3 911 766
- US-A- 4 192 622
- US-A- 5 649 781
- US-B2- 6 736 942

## Beschreibung

### Gebiet der Erfindung

Die vorliegende Erfindung betrifft eine drehbare Verbindung zwischen einem ersten Bauteil und einem zweiten Bauteil, insbesondere zwischen zwei Platten oder Formteilen. Der erste Bauteil ist also relativ zum zweiten Bauteil drehbar. Insbesondere betrifft die Erfindung eine drehbare Verbindung umfassend ein erstes Verbindungsstück aus Metall, wobei das erste Verbindungsstück zumindest über die gesamte Dicke des ersten Bauteils den ersten Bauteil durchdringt. Die Erfindung betrifft auch ein Verfahren zur Herstellung einer solchen drehbaren Verbindung.

### Stand der Technik

Drehbare Verbindungen zwischen zwei Bauteilen werden in verschiedensten Gebieten der Technik eingesetzt, beispielsweise in der Automobilindustrie, insbesondere zur Herstellung von Verdeckgestängen für Cabrios, aber auch beispielsweise für Gestänge von klappbaren Rollstühlen oder von Gartenscheren. In der Regel werden solche Verbindungen durch Verschraubungen oder Nieten der Bauteile hergestellt.

Eine prozesssichere und rasche Fertigung solcher drehbarer Verbindungen ist, auch abhängig von den verwendeten Materialien, nicht immer möglich.

Bei der Herstellung der Verbindung kann es zu Schädigungen der Bauteile kommen.

Insbesondere wenn die zu verbindenden Bauteile aus verschiedenen Materialien bestehen, kann es auch zu Korrosion zwischen den Materialien kommen.

Aus der US 2 556 449 A ist eine drehbare Verbindung zweier Bauteile bekannt, die einen Lagerbolzen mit zwei unterschiedlich großen zylindrischen Teilen verwendet. Ein Ende des Lagerbolzens ist mit dem zweiten Bauteil verschweißt.

Drehbare Verbindungen sind auch aus US 3 911 766 A, US 5 649 781 A und US 4 192 622 A bekannt.

### Zusammenfassung der Erfindung

Es ist eine Aufgabe der Erfindung, eine drehbare Verbindung zwischen einem ersten Bauteil und einem zweiten Bauteil anzugeben, die einfach und prozesssicher hergestellt werden kann und die Bauteile sowohl bei der Herstellung als auch bei der Benutzung möglichst wenig schädigt. Es ist auch eine Aufgabe der Erfindung ein einfaches Verfahren zur Herstellung einer solchen drehbaren Verbindung anzugeben.

Die Lösung der Aufgabe erfolgt durch eine drehbare Verbindung zwischen einem ersten Bauteil und einem zweiten Bauteil umfassend ein erstes Verbindungsstück aus Metall, wobei das erste Verbindungsstück zumindest über die gesamte Dicke des ersten Bauteils den ersten Bauteil durchdringt, wobei das erste Verbindungsstück an seinem dem zweiten Bauteil zugewandten Ende mit einem den zweite Bauteil durchdringenden zweiten Verbindungsstück aus Metall verschweißt ist.

Das metallische Verbindungsstück ist also erfindungsgemäß auf Seite des zweiten Bauteils nicht aufwändig mit einer Schraubenmutter oder einem anderen Abschlussteil befestigt und muss auch den zweite Bauteil nicht durchdringen, sondern ist, insbesondere wenn der zweite Bauteil aus Kunststoff oder aus Faserverbund besteht, mit einem weiteren metallischen Verbindungsstück verschweißt, dass in den zweite Bauteil eingebracht ist. Erfindungsgemäß durchdringt auch das zweite Verbindungsstück den zweiten Bauteil in seiner gesamten Dicke.

Weiterbildungen der Erfindung sind in den abhängigen Ansprüchen, der Beschreibung sowie den beigefügten Zeichnungen angegeben.

Insbesondere ist das erste Bauteil eine Platte oder ein Formteil und/oder das zweite Bauteil eine Platte oder ein Formteil. Unter Platte oder Formteil sind nicht nur flache bzw. im Wesentlichen in einer Ebene verlaufende Teile zu verstehen, sondern auch Strukturbauteile bzw. formgestaltete Teile wie beispielsweise Press-, Schmiede- und Zugteile oder Profilstangen oder Blechformen oder örtlich gequetschte Rohre oder Gussformen und ähnliches.

Das erste Verbindungsstück und/oder -falls vorhanden- das zweite Verbindungsstück kann zylinderförmig, stiftförmig oder als Stift mit Kopf ausgebildet sein. Formen ohne Kopf sind besonders geeignet für Verbindungen von drei Bauteilen, wo der erste Bauteil also einerseits mit einem zweiten Bauteil und am anderen Ende des Verbindungsstückes mit einem dritten Bauteil, oder beispielsweise einer Scheibe, verschweißt wird, so dass der erste Bauteil insbesondere relativ zum zweiten und dritten Bauteil drehbar ist. Formen des Verbindungsstückes mit Kopf sind wiederum besonders geeignet für nur einseitige Verschweißung des Verbindungsstückes, wobei der Kopf an der gegenüberliegenden Seite des ersten Bauteils an diesem anliegen kann und den ersten Bauteil an diesem Ende gegen axiales Verschieben sichern kann.

Bevorzugt besteht der erste Bauteil aus Kunststoff oder Faserverbund und ist insbesondere eine Kunststoffplatte oder eine Faserverbundplatte.

Der zweite Bauteil besteht bevorzugt aus Kunststoff oder Faserverbund oder Metall und ist bevorzugt eine Kunststoffplatte oder eine Faserverbundplatte oder eine Metallplatte, beispielsweise aus Stahl, insbesondere ein Metallblech. Erfindungsgemäß kann so eine drehbare Verbindung zwischen zwei Kunststoff- oder Faserverbundplatten hergestellt werden, aber auch eine Verbindung zwischen verschiedenen Materialien, nämlich insbesondere zwischen Kunststoff bzw. Faserverbund auf der einen Seite und Metall auf der anderen Seite.

Bevorzugt wird die Verschweißung durch Punktschweißung oder auch durch eine Verschweißung mit Hilfe einer reaktiven Folie hergestellt.

Besonders bevorzugt ist das erste Verbindungsstück in einer ersten Hülse angeordnet und/oder das zweite Verbindungsstück in einer zweiten Hülse angeordnet oder das erste Verbindungsstück und das zweite Verbindungsstück sind gemeinsam in der ersten Hülse angeordnet. Die Hülse wirkt bevorzugt als Gleitlagerhülse und besteht bevorzugt aus einem Material mit niedriger Reibwertpaarung zu Stahl, insbesondere aus Messing, Polyetheretherketon (PEEK) oder Keramik.

Bevorzugt ist die erste Hülse stoffschlüssig und/oder formschlüssig mit dem ersten Bauteil verbunden und/oder die zweite Hülse stoffschlüssig und/oder formschlüssig mit dem zweiten Bauteil verbunden. Das erste Verbindungsstück kann daher beispielsweise in der ersten Hülse drehbar gelagert sein, die ihrerseits fest mit dem ersten Bauteil verbunden ist. Bevorzugt weist die erste Hülse und/oder die zweite Hülse umfänglich verteilte Ausformungen, insbesondere Vertiefungen auf. Hierdurch kann durch Formschluss die Resistenz gegenüber Verdrehung der Hülse relativ zum Bauteil unter Last erhöht werden.

Bevorzugt sind zusätzlich zum ersten Bauteil weitere Bauteile, insbesondere weitere Platten oder Formteile, am ersten Verbindungsstück angeordnet, so dass das erste Verbindungsstück zumindest über die gesamte Dicke des ersten Bauteils und der weiteren Bauteile diese durchdringt, so dass der erste Bauteil und die weiteren Bauteile und der zweite Bauteil zueinander drehbar sind. Die weiteren Bauteile wirken daher wie weitere erste Bauteile, wobei alle ersten Bauteile drehbar am ersten Verbindungsstück gelagert sind. Bevorzugt kann das erste Verbindungsstück in diesem Fall an beiden Enden mit einem Metallblech verschweißt sein.

Gemäß einer weiteren Ausführungsform ist das erste Verbindungsstück als Stift mit Kopf ausgeführt und an dem Ende, an welchem das erste Verbindungsstück keinen Kopf aufweist, mit einem zweiten, als Stift mit Kopf ausgeführten, Verbindungsstück, an dessen Ende, das keinen Kopf aufweist, verschweißt. Jeweils die Enden ohne Kopf zweier Verbindungsstücke sind in diesem Fall miteinander verschweißt und deren Köpfe sichern bevorzugt zwei gegeneinander drehbare Bauteile axial. Das zweite Verbindungsstück kann dabei bevorzugt den gesamten zweiten Bauteil durchdringen.

Ein erfindungsgemäßes Verfahren zur Herstellung einer drehbaren Verbindung umfasst die Schritte, dass das erste Verbindungsstück durch den ersten Bauteil gesteckt wird und daraufhin das erste Verbindungsstück an seinem dem zweiten Bauteil zugewandten Ende mit dem zweiten Bauteil oder mit einem den zweiten Bauteil durchdringenden zweiten Verbindungsstück aus Metall verschweißt wird.

Bevorzugt wird die Verschweißung durch Punktschweißung oder durch eine Verschweißung mit einer reaktiven Folie hergestellt.

Besonders bevorzugt wird zuerst eine erste Hülse stoffschlüssig und/oder formschlüssig mit dem ersten Bauteil verbunden. Die Hülse kann beispielsweise in den ersten Bauteil eingepresst werden oder auch bereits bei der Herstellung des ersten Bauteils in diesen integriert werden, insbesondere durch Einweben in den ersten Bauteil. Das erste Verbindungsstück wird danach durch den ersten Bauteil gesteckt indem das erste Verbindungsstück in der ersten Hülse angeordnet wird, also durch die Hülse geführt wird. Danach wird das Verbindungsstück wieder verschweißt.

### Kurzbeschreibung der Zeichnungen

Die Erfindung wird im Folgenden beispielhaft unter Bezugnahme auf die Zeichnungen beschrieben.
- Fig. 1a, b: ist eine Ansicht einer nicht erfindungsgemäßen drehbaren Verbindung zwischen einem ersten Bauteil und einem zweiten Bauteil von der Seite (in 1 a) und eine Schnittansicht gem. A-A der Fig. 1a (in 1b).
- Fig. 2: ist eine Ansicht einer weiteren nicht erfindungsgemäßen drehbaren Verbindung zwischen einem ersten Bauteil und einem zweiten Bauteil von der Seite.
- Fig. 3: ist eine Ansicht einer erfindungsgemäßen drehbaren Verbindung zwischen einem ersten Bauteil und einem zweiten Bauteil von der Seite.
- Fig. 4: ist eine Ansicht einer weiteren nicht erfindungsgemäßen drehbaren Verbindung zwischen einem ersten Bauteil und einem zweiten Bauteil von der Seite.

### Detaillierte Beschreibung der Erfindung

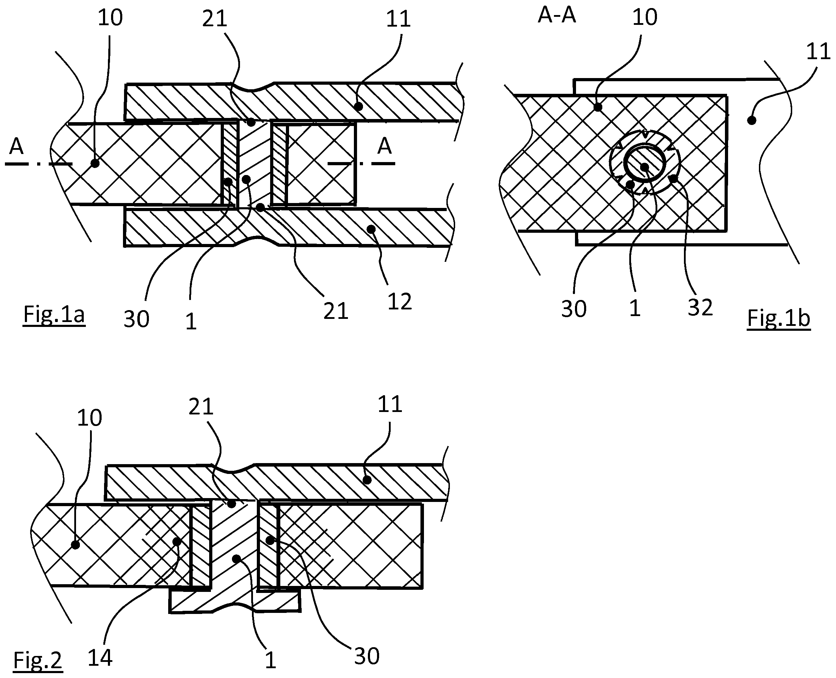

In den Fig. 1a und 1b ist eine drehbare Verbindung zwischen einem ersten Bauteil 10 aus Kunststoff oder Faserverbund und einem zweiten Bauteil 11, gebildet durch ein Metallblech, dargestellt. Die Verbindung umfasst ein erstes zylinder- oder stiftförmiges Verbindungsstück 1 aus Metall, wobei das erste Verbindungsstück 1 über die gesamte Dicke des ersten Bauteils 10 den ersten Bauteil 10 durchdringt. Das erste Verbindungsstück 1 ist an seinem dem zweiten Bauteil 11 zugewandten Ende mit dem zweiten Bauteil 11 in der Schweißzone 21 an der Oberfläche des zweiten Bauteils 11 durch Punktschweißen verschweißt. Das erste Verbindungsstück 1 ist weiters an seinem dem zweiten Bauteil 11 abgewandten Ende mit einem dritten Bauteil 12, beispielsweise einer Platte oder einem Formteil, ebenfalls in einer Schweißzone 21, verschweißt. Das Verbindungsstück 1 ist in einer ersten Hülse 30 angeordnet, die drehfest mit dem ersten Bauteil 10 verbunden ist und als Gleitlagerhülse wirkt. Die erste Hülse 30 ist etwas kürzer ausgeführt, als das Verbindungsstück 1 um ein Klemmen der verbundenen Bauteile zu verhindern. Wie in Fig. 1b ersichtlich, weist die erste Hülse 30 an ihrem Außendurchmesser Vertiefungen 32 auf um Sicherheit gegen Verdrehungen gegenüber dem ersten Bauteil 10 zu gewährleisten.

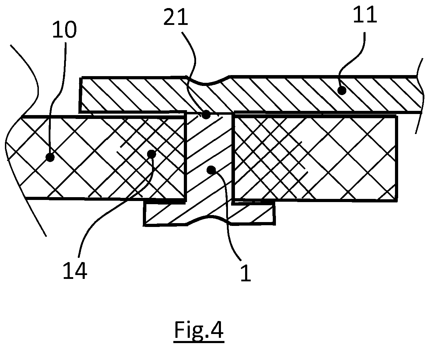

In der in Fig. 2 dargestellten Ausführungsform ist der erste Bauteil 10 lediglich einseitig mit einem zweiten Bauteil 11 drehbar verbunden. Das erste Verbindungsstück 1 ist als Stift mit einem Kopf ausgeführt und ist an dem Ende, an welchem das Verbindungsstück 1 keinen Kopf aufweist, in der Schweißzone 21, mit einem Metallblech, des zweiten Bauteils 11, verschweißt. Das Verbindungsstück 1 ist in dieser Ausführungsform ebenfalls in einer ersten Hülse 30 gelagert. Im Gegensatz dazu weist die Ausführung gemäß Fig. 4, die bei korrosions- und verschleißunkritischeren Materialien verwendet werden kann, bei sonst gleicher Ausführung wie in Fig. 2, keine Hülse 30 auf, wobei vorzugsweise die für die Aufnahme des Verbindungsstücks 1 vorgesehene Öffnung im ersten Bauteil 10 bereits beim Herstellungsprozess des ersten Bauteils 10 geschaffen wird, um eine hohe Festigkeit in diesem Bereich wie beispielsweise durch eine Verdichtung 14 der Fasern zu erhalten. Besonders bevorzugt wird jedoch eine erste Hülse 30, wie in Fig. 2 dargestellt, in den ersten Bauteil 10, der als Faserverbundplatte ausgeführt ist, eingewoben, wobei eine Verdichtung 14 der Fasern im Bereich um die erste Hülse 30 entsteht, durch welche die Festigkeit im Gelenkumfeld erhöht wird.

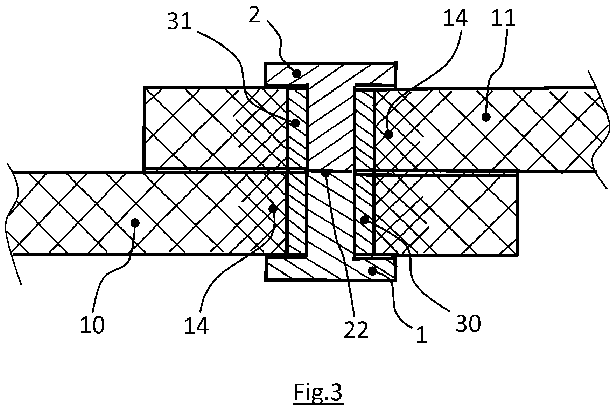

In der erfindungsgemäßen Ausführungsform der Fig. 3 ist das erste Verbindungsstück 1 als Stift mit Kopf ausgeführt und ist an dem Ende, an welchem das erste Verbindungsstück 1 keinen Kopf aufweist, mit einem zweiten, als Stift mit Kopf ausgeführten, Verbindungsstück 2 verschweißt und zwar an dem Ende des zweiten Verbindungsstückes 2, das ebenfalls keinen Kopf aufweist. Die Verschweißung in der Schweißzone 22 erfolgt mittels einer reaktiven Folie. Das erste Verbindungsstück 1 ist über eine erste Hülse 30 gelagert im ersten Bauteil 10 und das zweite Verbindungsstück 2 über eine zweite Hülse 31 gelagert im zweiten Bauteil 11. Erste und zweite Bauteile 10, 11 sind hier als Kunststoff oder Faserverbundplatten ausgeführt und gegeneinander drehbar. In einer weiteren Ausführungsform kann die zweite Hülse 31 auch entfallen und dafür die erste Hülse 30 länger gestaltet werden, so dass sie den erste und den zweiten Bauteil 10, 11 durchdringt. Auch hier kann die erste und/oder die zweite Hülse 30, 31 etwas kürzer ausgeführt sein, als die Verbindungsstücke 1, 2 um ein Klemmen der verbundenen Bauteile zu verhindern.

### Bezugszeichenliste

- 1: erstes Verbindungsstück
- 2: zweites Verbindungsstück
- 10: erstes Bauteil
- 11: zweites Bauteil
- 12: drittes Bauteil
- 14: Verdichtung
- 21: Schweißzone
- 22: Schweißzone
- 30: erste Hülse
- 31: zweite Hülse
- 32: Vertiefung

## Patentansprüche

1. Drehbare Verbindung zwischen einem ersten Bauteil (10) und einem zweiten Bauteil (11) umfassend ein erstes Verbindungsstück (1) aus Metall, wobei das erste Verbindungsstück (1) zumindest über die gesamte Dicke des ersten Bauteils (10) den ersten Bauteil (10) durchdringt,
**dadurch gekennzeichnet, dass** das erste Verbindungsstück (1) an seinem dem zweiten Bauteil (11) zugewandten Ende mit einem den zweiten Bauteil (11) durchdringenden zweiten Verbindungsstück (2) aus Metall verschweißt ist.

2. Drehbare Verbindung nach Anspruch 1,
**dadurch gekennzeichnet, dass** das erste Bauteil (10) eine Platte oder ein Formteil ist und/ oder das zweite Bauteil (11) eine Platte oder ein Formteil ist.

3. Drehbare Verbindung nach Anspruch 1 oder 2,
**dadurch gekennzeichnet, dass** das erste Verbindungsstück (1) und/oder das zweite Verbindungsstück (2) zylinderförmig, stiftförmig oder als Stift mit Kopf ausgebildet ist.

4. Drehbare Verbindung nach zumindest einem der vorhergehenden Ansprüche,
**dadurch gekennzeichnet, dass** das erste Bauteil (10) aus Kunststoff oder aus einem Faserverbundmaterial besteht, insbesondere eine Kunststoffplatte oder eine Faserverbundplatte ist.

5. Drehbare Verbindung nach zumindest einem der vorhergehenden Ansprüche,
**dadurch gekennzeichnet, dass** das zweite Bauteil (11) aus Kunststoff oder aus einem Faserverbundmaterial oder aus Metall besteht, insbesondere eine Kunststoffplatte oder eine Faserverbundplatte oder eine Metallplatte, insbesondere ein Metallblech, ist.

6. Drehbare Verbindung nach zumindest einem der vorhergehenden Ansprüche,
**dadurch gekennzeichnet, dass** die Verschweißung durch Punktschweißung oder durch eine Verschweißung mit einer reaktiven Folie hergestellt ist.

7. Drehbare Verbindung nach zumindest einem der vorhergehenden Ansprüche,
**dadurch gekennzeichnet, dass** das erste Verbindungsstück (1) in einer ersten Hülse (30) angeordnet ist und/oder das zweite Verbindungsstück (2) in einer zweiten Hülse (31) angeordnet ist oder das erste Verbindungsstück (1) und das zweite Verbindungsstück (2) in der ersten Hülse (30) angeordnet sind.

8. Drehbare Verbindung nach Anspruch 7,
**dadurch gekennzeichnet, dass** die erste Hülse (30) stoffschlüssig und/oder formschlüssig mit dem ersten Bauteil (10) verbunden ist und/ oder die zweite Hülse (31) stoffschlüssig und/ oder formschlüssig mit dem zweiten Bauteil (11) verbunden ist.

9. Drehbare Verbindung nach Anspruch 8,
**dadurch gekennzeichnet, dass** die erste Hülse (30) und/ oder die zweite Hülse (31) umfänglich verteilte Ausformungen, insbesondere Vertiefungen (32) aufweist.

10. Drehbare Verbindung nach zumindest einem der vorhergehenden Ansprüche,
**dadurch gekennzeichnet, dass** zusätzlich zum ersten Bauteil (10) weitere Bauteile, insbesondere weitere Platten oder Formteile, am ersten Verbindungsstück angeordnet sind, so dass das erste Verbindungsstück (1) zumindest über die gesamte Dicke des ersten Bauteils (10) und der weiteren Bauteile diese durchdringt, so dass der erste Bauteil (10) und die weiteren Bauteile und der zweite Bauteil (11) zueinander drehbar sind.

11. Drehbare Verbindung nach zumindest einem der Ansprüche 1 bis 10,
**dadurch gekennzeichnet, dass** das erste Verbindungsstück (1) als Stift mit Kopf ausgeführt ist und an dem Ende, an welchem das erste Verbindungsstück (1) keinen Kopf aufweist, mit einem zweiten, als Stift mit Kopf ausgeführten, Verbindungsstück (2), an dessen Ende, das keinen Kopf aufweist, verschweißt ist.

12. Verfahren zur Herstellung einer drehbaren Verbindung nach zumindest einem der Ansprüche 1 bis 11,
**dadurch gekennzeichnet, dass** das erste Verbindungsstück (1) durch den ersten Bauteil (10) gesteckt wird und daraufhin das erste Verbindungsstück (1) an seinem dem zweiten Bauteil (11) zugewandten Ende mit einem den zweite Bauteil (11) durchdringenden zweiten Verbindungsstück (2) aus Metall verschweißt wird.

13. Verfahren nach Anspruch 12,
**dadurch gekennzeichnet, dass** die Verschweißung durch Punktschweißung oder durch eine Verschweißung mit einer reaktiven Folie hergestellt wird.

14. Verfahren nach Anspruch 12 oder 13,
**dadurch gekennzeichnet, dass** zuerst eine erste Hülse (30) stoffschlüssig und/oder formschlüssig mit dem ersten Bauteil (10) verbunden wird und dass das erste Verbindungsstück (1) durch den erste Bauteil (10) gesteckt wird indem das erste Verbindungsstück (1) in der ersten Hülse (30) angeordnet wird.

## Claims

1. Rotatable connection between a first component (10) and a second component (11) comprising a first connecting piece (1) made of metal, wherein the first connecting piece (1) penetrates the first component (10) over at least the entire thickness of the first component (10), **characterized in that** at its end facing the second component (11) the first connecting piece (1) is welded to a second connecting piece (2) made of metal penetrating the second component (11).

2. Rotatable connection according to Claim 1, **characterized in that** the first component (10) is a plate or a shaped part and/or the second component (11) is a plate or a shaped part.

3. Rotatable connection according to Claim 1 or 2, **characterized in that** the first connecting piece (1) and/or the second connecting piece (2) is configured to be cylindrical, pin-shaped or as a pin with a head.

4. Rotatable connection according to at least one of the preceding claims, **characterized in that** the first component (10) consists of plastics or a fibre composite material, in particular is a plastics plate or a fibre composite plate.

5. Rotatable connection according to at least one of the preceding claims, **characterized in that** the second component (11) consists of plastics or a fibre composite material or of metal, in particular is a plastics plate or a fibre composite plate or a metal plate, in particular a metal sheet.

6. Rotatable connection according to at least one of the preceding claims, **characterized in that** the welding is carried out by spot welding or by welding by means of a reactive film.

7. Rotatable connection according to at least one of the preceding claims, **characterized in that** the first connecting piece (1) is arranged in a first sleeve (30) and/or the second connecting piece (2) is arranged in a second sleeve (31) or the first connecting piece (1) and the second connecting piece (2) are arranged in the first sleeve (30).

8. Rotatable connection according to Claim 7, **characterized in that** the first sleeve (30) is connected to the first component (10) by a material connection or positive connection and/or the second sleeve (31) is connected to the second component (11) by a material connection and/or positive connection.

9. Rotatable connection according to Claim 8, **characterized in that** the first sleeve (30) and/or the second sleeve (31) has shaped portions, in particular recesses (32), distributed over the periphery.

10. Rotatable connection according to at least one of the preceding claims, **characterized in that**, in addition to the first component (10), further components, in particular further plates or shaped parts, are arranged on the first connecting piece, so that over at least the entire thickness of the first component (10) and the further components the first connecting piece (1) penetrates said components, so that the first component (10) and the further components and the second component (11) are rotatable relative to one another.

11. Rotatable connection according to at least one of Claims 1 to 10, **characterized in that** the first connecting piece (1) is designed as a pin with a head and, at the end at which the first connecting piece (1) has no head, is welded to a second connecting piece (2) which is designed as a pin with a head, at the end thereof which has no head.

12. Method for producing a rotatable connection according to at least one of Claims 1 to 11, **characterized in that** the first connecting piece (1) is placed through the first component (10) and then the first connecting piece (1) is welded at its end facing the second component (11) to a second connecting piece (2) made of metal penetrating the second component (11).

13. Method according to Claim 12, **characterized in that** the welding is produced by spot welding or by a welding by means of a reactive film.

14. Method according to Claim 12 or 13, **characterized in that** initially a first sleeve (30) is connected to the first component (10) by a material connection and/or positive connection and **in that** the first connecting piece (1) is placed through the first component (10) by the first connecting piece (1) being arranged in the first sleeve (30).

## Revendications

1. Liaison rotative entre un premier composant (10) et un deuxième composant (11) comprenant une première pièce de liaison (1) en métal, la première pièce de liaison (1) traversant le premier composant (10) au moins sur toute l'épaisseur du premier composant (10), **caractérisée en ce que** la première pièce de liaison (1) est soudée au niveau de son extrémité tournée vers le deuxième composant (11) avec une deuxième pièce de liaison (2) en métal traversant le deuxième composant (11).

2. Liaison rotative selon la revendication 1,
**caractérisée en ce que** le premier composant (10) est une plaque ou une pièce moulée et/ou le deuxième composant (11) est une plaque ou une pièce moulée.

3. Liaison rotative selon la revendication 1 ou 2,
**caractérisée en ce que** la première pièce de liaison (1) et/ou la deuxième pièce de liaison (2) sont réalisées sous forme cylindrique, en forme de goupille ou sous forme de goupille avec une tête.

4. Liaison rotative selon au moins l'une quelconque des revendications précédentes,
**caractérisée en ce que** le premier composant (10) se compose de plastique ou d'un matériau composite renforcé par des fibres, en particulier est une plaque en plastique ou une plaque en composite renforcé par des fibres.

5. Liaison rotative selon au moins l'une quelconque des revendications précédentes,
**caractérisée en ce que** le deuxième composant (11) se compose de plastique ou d'un matériau composite renforcé par des fibres ou de métal, en particulier est une plaque en plastique ou une plaque en matériau composite renforcé par des fibres, ou une plaque métallique, en particulier une tôle métallique.

6. Liaison rotative selon au moins l'une quelconque des revendications précédentes,
**caractérisée en ce que** le soudage est réalisé par soudage par points ou par un soudage avec une feuille réactive.

7. Liaison rotative selon au moins l'une quelconque des revendications précédentes, **caractérisée en ce que** la première pièce de liaison (1) est disposée dans une première douille (30) et/ou la deuxième pièce de liaison (2) est disposée dans une deuxième douille (31) ou la première pièce de liaison (1) et la deuxième pièce de liaison (2) sont disposées dans la première douille (30).

8. Liaison rotative selon la revendication 7,
**caractérisée en ce que** la première douille (30) est connectée par engagement par liaison de matière et/ou par engagement par correspondance de formes au premier composant (10) et/ou la deuxième douille (31) est connectée par liaison de matière et/ou par engagement par correspondance de formes au deuxième composant (11).

9. Liaison rotative selon la revendication 8,
**caractérisée en ce que** la première douille (30) et/ou la deuxième (31) présentent des formations réparties sur la périphérie, en particulier des renfoncements (32).

10. Liaison rotative selon au moins l'une quelconque des revendications précédentes,
**caractérisée en ce qu'**en plus du premier composant (10), des composants supplémentaires, en particulier d'autres plaques ou pièces moulées, sont disposés sur la première pièce de liaison, de telle sorte que la première pièce de liaison (1) traverse le premier composant (10) et les composants supplémentaires, au moins sur toute leur épaisseur, de sorte que le premier composant (10) et les composants supplémentaires et le deuxième composant (11) puissent tourner les uns par rapport aux autres.

11. Liaison rotative selon au moins l'une quelconque des revendications 1 à 10,
**caractérisée en ce que** la première pièce de liaison (1) est réalisée sous forme de goupille avec une tête et à l'extrémité au niveau de laquelle la première pièce de liaison (1) ne présente pas de tête, est soudée à une deuxième pièce de liaison (2) réalisée sous forme de goupille avec une tête, au niveau de son extrémité qui ne présente pas de tête.

12. Procédé de fabrication d'une liaison rotative selon au moins l'une quelconque des revendications 1 à 11,
**caractérisé en ce que** la première pièce de liaison (1) est enfichée à travers le premier composant (10) puis la première pièce de liaison (1) est soudée au niveau de son extrémité tournée vers le deuxième composant (11) à une deuxième pièce de liaison (2) en métal traversant le deuxième composant (11).

13. Procédé selon la revendication 12,
**caractérisé en ce que** le soudage est réalisé par soudage par points ou par un soudage avec une feuille réactive.

14. Procédé selon la revendication 12 ou 13,
**caractérisé en ce que** tout d'abord une première douille (30) est connectée par engagement par liaison de matière et/ou par correspondance de formes au premier composant (10) et **en ce que** la première pièce de liaison (1) est enfichée à travers le premier composant (10) en disposant la première pièce de liaison (1) dans la première douille (30).
